# EUROPEAN PATENT APPLICATION

(11) **EP 3 301 753 A1**
(43) Date of publication of application: **04.04.2018**
(21) Application number: 17275152.1
(22) Date of filing: 29.09.2017
(51) Int. Cl.: H01P 1/213

(54) **MULTIPLEXER APPARATUS AND METHOD OF USE THEREOF**

(30) Priority: 30.09.2016 GB 201616637
(71) Applicant: Radio Design Limited, West Yorkshire BD17 7DW (GB)
(72) Inventor: SLEIGH, Philip, Shipley, Yorkshire BD17 7DW (GB); PARRY, Richard, Shipley, Yorkshire BD17 7DW (GB); HUNTER, Ian, Shipley, Yorkshire BD17 7DW (GB); GOSTLING, Martin, Shipley, Yorkshire BD17 7DW (GB)
(74) Representative: Tomkinson, Alexandra

(57) **Abstract**

Multiplexer apparatus is provided including at least one common connection port, and at least first and second channel connection ports and/or at least one transmit radio frequency connection port and at least one receive radio frequency connection port. At least one first radio frequency path is connected between said at least one common connection port and the at least first channel connection port or transmit radio frequency connection port. At least a second radio frequency path is connected between said at least one common connection port and the at least second channel connection port or receive radio frequency connection port. The first and second radio frequency paths are for transmitting and/or receiving one or more radio frequency signals therealong in use. At least one filter means is provided in each of said at least first and second radio frequency paths for filtering one or more radio frequency signals. A further connection port is provided that is electrically terminated. A third radio frequency path is provided between the first channel connection port or the transmit connection port and the electrically terminated connection port. A fourth radio frequency path is provided between the second channel connection port or the receive connection port and the electrically terminated connection port. At least one filter means is provided in each of the third and fourth radio frequency paths.

## Description

This invention relates to multiplexer apparatus and to a method of use thereof, and particularly to multiplexer apparatus of a type for combining and/or splitting radio frequency (RF) signals.

Mobile phone operators seek to minimise the capital expenditure (capex) required to build a wireless network as well as minimise the ongoing operating expenditure (opex). If an operator provides both 3G (3rd generation mobile communication) and 4G (4th generation mobile communication) wireless network services then a way to reduce opex is for the two networks to share a cell site. However, the sharing of cell sites typically results in complex logistics relating to the installation of the cell sites.

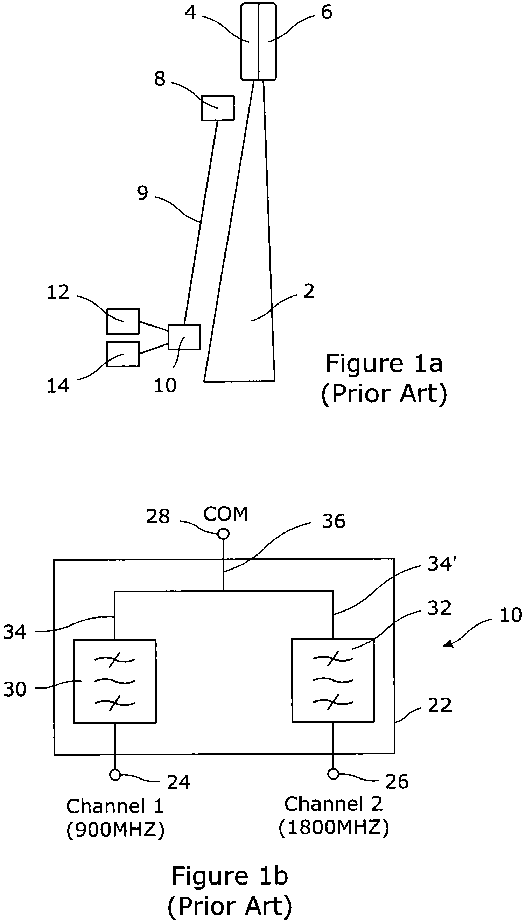

An example of a typical cell site arrangement, forming part of a wireless telecommunications network, in which two different wireless technology service networks share the same site, is shown in figure 1a. In this example the 3G and 4G services of a particular operator share the same mast. The 3G and 4G services are in different frequency operating bands (for example 900MHz and 1800MHz respectively). Multiplexing apparatus in the form of a diplexer unit is provided to allow combining and/or splitting of RF signals so that equipment on the mast can be shared. Thus, the cell site includes a mast 2, at the top of which is mounted a 900MHz antenna 4 for transmitting and/or receiving one or more radio frequency signals in the 900MHz frequency band, and a 1800MHz antenna 6 for transmitting and/or receiving one or more radio frequency signals in the 1800MHz frequency band. A diplexer unit 8 is provided at the top of mast 2 for receiving radio frequency signals from the 1800MHz antenna 6 and the 900MHz antenna 4 and combining the same into a common feeder cable 9. In addition, diplexer unit 8 splits the combined transmit signals in the 900MHz and 1800 MHz frequency bands that have been transmitted along common feeder cable 9 and transmit the 900MHz and 1800MHz signals to the 900MHz antenna 4 and the 1800MHz antenna 6 respectively. A further diplexer unit 10 provided at the base of mast 2 splits the combined RF signals in the 900MHz and 1800MHz frequency bands being received from cable 9 for passage to a 900MHz base station (BTS) 12 and 1800MHz base station (BTS) 14 respectively located at the base of mast 2. Diplexer unit 10 also takes RF signals transmitted from the BTSs 12, 14 and combines the same for passage along common feeder cable 9 to diplexer unit 8 at the top of the mast. Each BTS 12, 14 typically includes a transceiver that generates one or more radio frequency signals for transmission to a mobile phone unit via the antennae 4, 6, as well as receiving one or more radio frequency signals from a mobile phone unit via antennae 4, 6.

Figure 1b is a circuit diagram showing the filter arrangement of the conventional diplexer unit 10. The unit 10 typically comprises a housing 22 having a 900MHz channel port 24 for connection to 900MHz BTS 12, and a 1800MHz channel port 26 for connection to 1800MHz BTS 14. A common port 28 is provided for transmitting and/or receiving the combined 1800MHz and 900MHz RF signals.

Diplexer Unit 10 includes a 900MHz filter 30 provided between the 900MHz channel port 24 and common port 28 for allowing the passage of transmit and/or receive RF signals in the 900MHz frequency band, but for substantially preventing passage of transmit and/or receive RF signals at any other frequency. Unit 10 includes a 1800MHz filter 32 provided between the 1800MHz channel port 26 and common port 28 for allowing the passage of transmit and/or receive RF signals in the 1800MHz frequency band, but for substantially preventing passage of transmit and/or receive RF signals at any other frequency. The ends 34, 34' of filters 30, 32 are multiplexed together to provide a common signal path 36 connected to common port 28.

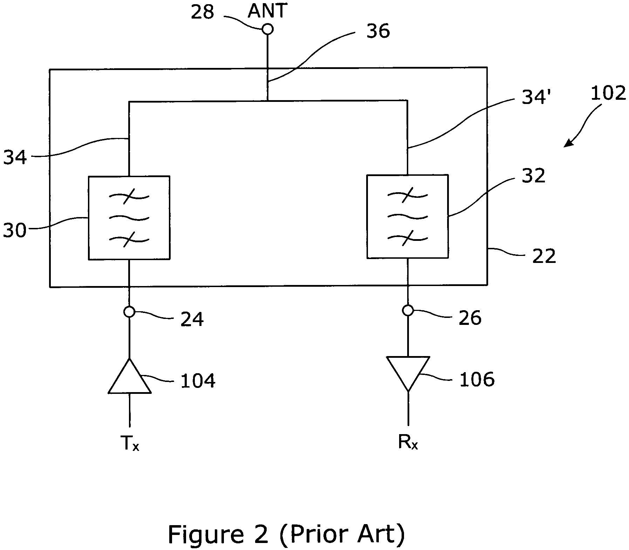

Figure 2 is a further example of a circuit diagram showing the filter arrangement of a conventional diplexer unit 102. In this unit 102, the connection port 24 is a transmit port for the transmission of one or more transmit RF signals at a particular RF frequency, the connection port 26 is a receive port for receiving one or more receive RF signals at a particular RF frequency, and the common port 28 is for connection to an antenna. A transmission RF pathway 34 is provided between transmit port 24 and the common port 28, and a receive RF pathway 34' is provided between receive port 26 and the common port 28. A transmission filter 30 is provided in transmit pathway 34 for allowing the passage of one or more transmit RF signals at a particular frequency therethrough but to substantially prevent the passage of any other RF signal therethrough, and a receive filter 32 is provided in receive pathway 34' for allowing the passage of one or more receive RF signals at a particular frequency therethrough but to substantially prevent the passage of any other RF signal therethrough. One end of each of the filters 30, 32 are multiplexed together as previously described to form a common path to common port 28. Amplification means are connected to each of the transmit port 24 and the receive port 26 for amplifying the transmission and receive signals entering and leaving the diplexer unit 102 respectively.

Problems associated with conventional diplexer apparatus is that there can be high insertion loss of RF signals as they pass between the channel ports and the common port, and there can be low isolation between the two channel ports or between the receive port and the transmission port. In order to overcome these problems, high Q factor filters need to be used in order to lower the insertion loss, and high order filters need to be used to provide good isolation between the two channels or between the receive port and the transmission port. However, high Q factor filters and high order filters can be large, expensive and the resulting circuitry can be complex in design.

It is therefore an aim of the present invention to provide multiplexer apparatus that overcomes the abovementioned problems.

It is a further aim of the present invention to provide a method of using or assembling multiplexer apparatus that overcomes the abovementioned problems.

According to a first aspect of the present invention there is provided Multiplexer apparatus, said multiplexer apparatus including:
- at least one common connection port;
- at least first and second channel connection ports and/or at least one transmit radio frequency connection port and at least one receive radio frequency connection port;
- at least one first radio frequency path connected between said at least one common connection port and the at least first channel connection port or transmit radio frequency connection port;
- and at least a second radio frequency path connected between said at least one common connection port and the at least second channel connection port or receive radio frequency connection port;
- the first and second radio frequency paths for transmitting and/or receiving one or more radio frequency signals therealong in use;
- at least one filter means provided in each of said at least first and second radio frequency paths for filtering one or more radio frequency signals;
characterised in that:
- a further connection port is provided that is electrically terminated;
- a third radio frequency path is provided between the first channel connection port or the transmit connection port and the electrically terminated connection port;
- a fourth radio frequency path is provided between the second channel connection port or the receive connection port and the electrically terminated connection port; and wherein at least one filter means is provided in each of the third and fourth radio frequency paths.

Thus, the multiplexer apparatus of the present invention provides significantly improved isolation between the first and second channel ports, or between the transmit connection port and the receive connection port, in use.

Preferably the multiplexer apparatus is in the form of a diplexer unit.

Preferably the further connection port is electrically terminated in a match, impedance or load that is equal to or substantially equal to a match, impedance or load applied to the common connection port.

Preferably the RF amplitude response in the path between the at least first and second channel connection ports via the first and second paths is equal to or substantially equal to the RF amplitude response in the path between the at least first and second channel connection ports via the third and fourth paths.

Preferably the RF amplitude response in the path between the transmit RF connection port and the receive RF connection port via the first and second paths is equal to or substantially equal to the RF amplitude response in the path between the at least transmit and receive connection ports via the third and fourth paths.

Preferably the path between the at least first and second connection ports, or between the transmit and receive RF connection ports, via the first and second paths has a 180 or substantially 180 degree phase difference to the path between the at least first and second connection ports, or between the transmit and receive RF connection ports, via the third and fourth paths.

Preferably the RF amplitude response between the filter means in the first RF path is equal to or substantially equal to the RF amplitude response of the filter means in the fourth RF path.

Preferably the RF amplitude response between the filter means in the second RF path is equal to or substantially equal to the RF amplitude response of the filter means in the third RF path.

In one embodiment the filter means within a particular path can consist of a single filter.

In one embodiment the filter means within a particular path can consist of two or more filters.

The filter means is typically any device which allows the passage one or more of more RF signals therethrough of a first frequency or set of frequencies, and which prevents or substantially prevents the passage of one or more RF signals therethrough of a frequency other than said first frequency or set of frequencies.

In one embodiment the filter means can include any or any combination of one or more low pass filters, high pass filters, passband filters, band stop filters and/or the like.

In one embodiment where there is a transmit RF connection port and a receive RF connection port, the filter means in the first and fourth paths are transmission filter means for allowing one or more transmission signals at a first frequency or set of frequencies to pass therethrough, but to prevent or substantially prevent one or more other signals from passing therethrough. The filter means in the second and third paths are receive filter means for allowing one or more receive signals at a second of second set of frequencies to pass therethrough, but to prevent or substantially prevent one or more other signals from passing therethrough.

Preferably the first frequency or set of frequencies is different to or substantially different to the second frequency or set of frequencies.

In one embodiment the further connection port that is electrically terminated can include any or any combination of impedance means or device, resistor means, capacitor means, inductor means, or one or more resistors, capacitors, inductors and/or the like.

In one embodiment the filter means in any or any combination of the pathways are or include one or more tuneable filters to allow the filter means to be tuned so as to operate at a particular frequency or set of frequencies. Preferably the one or more tuneable filters are tuneable using tuning means.

In one embodiment the common connection port and/or the further connection port are tuneable and/or are provided with or associated with tuning means to allow the match or load applied to the connection ports to be made equal or substantially equal to each other.

Preferably the tuning means can include any or any combination of one or more rotatable screws, threaded screws, tuning screws and/or the like.

Preferably the tuning means are anything that allows the radio frequency response of the filter means, or match, impedance or load applied to the connection ports, to be adjusted in use.

Preferably the multiplexer apparatus includes a housing in which the circuitry of the apparatus is provided.

In one embodiment the first channel connection port is arranged to receive and/or transmit one or more RF signals at a first frequency, first set of frequencies or first frequency range, and the second channel connection port is arranged to receive and/or transmit one or more RF signals at a second frequency, second set of frequencies or second frequency range.

Preferably the first frequency, first set of frequencies or first frequency range is different or substantially different to the second frequency, second set of frequencies, or second frequency range.

In one embodiment the first transmit RF connection port is arranged to transmit one or more RF signals at a particular frequency or frequencies, and the second receive RF connection port is arranged to receive one or more RF signals at a particular frequency or frequencies.

The transmit RF signals and the receive RF signals are preferably at different or substantially different frequency or frequencies.

In one embodiment the 180 degree phase difference in the path between the first and second channel connection ports, or between the transmit and receive RF connection ports, via the first and second RF pathways, and the path between the first and second connection ports, or between the transmit and receive RF connection ports, via the third and fourth RF pathways can be caused by phase shifting means.

In one embodiment the phase shifting means is in the form of a transmission line having an electrical length of 180 degrees.

Preferably the phase shifting means is provided in any of the first, second, third or fourth RF paths, and further preferably is provided in any of the first, second, third or fourth RF path between the channel connection port or the receive or transmit connection ports and the filter means in said path.

In one embodiment the 180 degree phase difference between the path between the first and second channel ports, or between the transmit and receive RF connection ports, via the first and second RF paths, and the path between the first and second channel ports, or between the transmit and receive RF connection ports, via the third and fourth RF paths can be caused by providing at least one different type of coupling within and/or between the paths.

Preferably the at least one different type of coupling could be an electrical coupling, a magnetic coupling, a positive coupling, a negative coupling and/or the like.

Preferably the couplings are provided between one or more resonators or resonating means in or associated with the filter means, between the input or output ports of the filter means and/or the like.

For example, the first and second RF pathways could have all positive couplings provided therein and the third and fourth RF paths could have one negative coupling or vice versa. In another example, the first and second RF paths could have all electrical couplings provided therein and the third and fourth RF paths could have one magnetic coupling provided therein or vice versa.

In one embodiment the 180 degree phase difference between the first and second RF paths and the third and fourth RF paths can be caused by arranging the first and fourth filter means to have an equal or substantially equal RF amplitude and phase response, and arranging the second and third filter means to have an equal or substantially equal RF amplitude response but a phase response that is opposite or substantially opposite.

In one embodiment the apparatus includes at least one further circuit of the same or similar type to the first circuit described above. Preferably the further circuit is a mirror image of the first circuit. This provides a dual multiplexer apparatus or a multi-circuit multiplexer apparatus.

According to a second aspect of the present invention there is provided a method of using multiplexer apparatus, said multiplexer apparatus including:
- at least one common connection port;
- at least first and second channel connection ports and/or at least one transmit radio frequency connection port and at least one receive radio frequency connection port;
- said method including the steps of providing at least one first radio frequency path between said at least one common connection port and the at least first channel connection port or transmit radio frequency connection port;
- providing at least a second radio frequency path between said at least one common connection port and the at least second channel connection port or receive radio frequency connection port;
- the first and second radio frequency paths for transmitting and/or receiving one or more radio frequency signals therealong in use;
- providing at least one filter means in each of said at least first and second radio frequency paths for filtering one or more radio frequency signals;
characterised in that the method further includes the steps of:
- electrically terminating a further connection port;
- providing a third radio frequency path between the first channel connection port or the transmit connection port and the electrically terminated connection port;
- providing a fourth radio frequency path between the second channel connection port or the receive connection port and the electrically terminated connection port; and providing at least one filter means in each of the third and fourth radio frequency paths.

According to a further aspect of the present invention there is provided a telecommunication system including multiplexer apparatus.

According to a yet further aspect of the present invention there is provided a method of using a telecommunication system including multiplexer apparatus.

Embodiments of the present invention will now be described with reference to the following drawings, wherein:
Figure 1a (PRIOR ART) is a simplified diagram of a conventional telecommunications cell site;
Figure 1b (PRIOR ART) is a simplified circuit diagram of a conventional diplexer unit that can be used in the cell site shown in figure 1a;
Figure 2 (PRIOR ART) is a simplified circuit diagram of a further example of a conventional diplexer unit;
Figure 3a is a simplified circuit diagram of diplexer apparatus according to a first embodiment of the present invention;
Figure 3b is a simplified circuit diagram of diplexer apparatus according to a second embodiment of the present invention;
Figure 4 is a simplified circuit diagram of diplexer apparatus according to a third embodiment of the present invention; and
Figure 5 is a simplified circuit diagram of diplexer apparatus according to a fourth embodiment of the present invention.

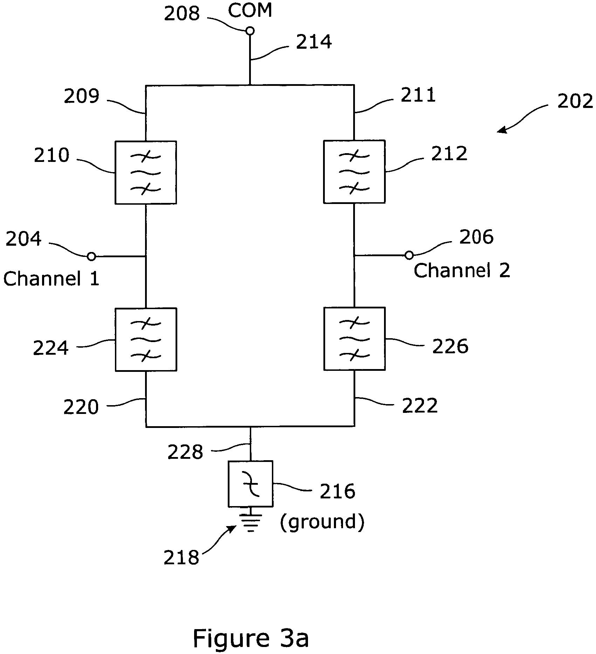

Referring firstly to figure 3a, there is illustrated multiplexer apparatus in the form of a diplexer unit 202 according to an embodiment of the present invention.

Diplexer unit 202, has a first channel connection port 204 for transmitting and/or receiving RF signals at a first set of frequencies or frequency range, and a second channel connection port 206 for transmitting and/or receiving one or more RF signals at a second set of frequencies or frequency range. The first set of frequencies or frequency range is different to the second set of frequencies or frequency range. A common connection port 208 is provided.

A first RF pathway 209 is provided between first channel port 204 and the common connection port 208, and a second RF pathway 211 is provided between second channel port 206 and the common connection port 208. A first filter 210 is provided in the first pathway 209 for allowing one or more RF signals of the first set of frequencies or frequency range to pass therethrough but to prevent or substantially prevent one or more RF signals of any other frequency from passing therethrough. A second filter 212 is provided in the second pathway 211 for allowing one or more RF signals of the second set of frequencies or frequency range to pass therethrough but to prevent or substantially prevent one or more RF signals of any other frequency from passing therethrough.

The ends of filters 210, 212 are multiplexed together to form a common pathway 214 to join to common connection port 208.

In accordance with the present invention, a fourth or further connection port 216 is provided and this port is electrically terminated with an impedance. The impedance is to ground 218.

A third RF pathway 220 is provided between the first channel port 204 and the fourth connection port 216, and a fourth RF pathway 222 is provided between the second channel port 206 and the fourth connection port 216.

A third filter 224 is provided in the third pathway 220 for allowing one or more RF signals of a third set of frequencies or frequency range to pass therethrough but to prevent or substantially prevent one or more RF signals of any other frequency from passing therethrough. A fourth filter 226 is provided in the fourth pathway 222 for allowing one or more RF signals of a fourth set of frequencies or frequency range to pass therethrough but to prevent or substantially prevent one or more RF signals of any other frequency from passing therethrough. The ends of filters 224, 226 are multiplexed together to form a common pathway 228 for connection to fourth connection port 216.

The third set of frequencies or frequency range is typically equal or substantially equal to the second set of frequencies or frequency range. The fourth set of frequencies or frequency range is typically equal to substantially equal to the first set of frequencies or frequency range.

In one embodiment, in order for the above arrangement to effectively provide improved isolation between the two channel ports 204, 206, the match or load of the fourth connection port 216 is equal or substantially equal to the match or load of the common connection port 208. In one example this can be achieved by providing tuning means on or associated with the common connection port 208 and/or the fourth connection port 216.

The RF amplitude response of one set of diagonally arranged filters in the circuit diagram needs to be equal or substantially equal to the RF amplitude response of the other set of diagonal filters. Thus, the RF amplitude response of filter 210 is equal to or substantially equal to the RF response of filter 226, and the RF amplitude response of filter 212 is equal to or substantially equal to the RF response of filter 224.

The path between the first and second connection ports 204, 206 via the first and second RF pathways 209, 211 needs to have a 180 degree or substantially 180 degrees phase difference to the path between the first and second connection ports 204, 206 via the third and fourth RF pathways 220, 222. This phase difference can be achieved by suitable choice of couplings. For example, the input / output couplings and all inter resonator couplings in the first RF pathway could be of identical type to those in the fourth RF pathway but the second RF pathway could have a single input coupling that was of a different type to an input coupling in the third RF pathway with all other couplings in the second and third RF pathways being of identical type. The different types could be achieved by replacing a magnetic coupling with an electrical coupling or vice versa for example.
The result of the filter arrangement above is that the amplitude of the leakage of RF signals in the path between the first and second connection ports 204, 206 via the first and second RF pathways 209, 211 is equal to or substantially equal to the amplitude of the leakage of second of RF signals in the path between the first and second connection ports 204, 206 via the third and fourth RF pathways 220, 222. As there is a 180 degree phase difference between the first and second pathways 209, 211 and the third and fourth pathways 220, 222, this allows the leakage of RF signals in the pathways to cancel each other out. This in turn, creates high isolation between the first and second channel ports 204, 206, irrespective of the order of filters used in the apparatus. This allows lower order filters to be used for filters 210, 212, 224 and 226, thereby saving on cost and space and reducing complexity of the apparatus. In addition, use of lower order filters results in lower insertion loss in the apparatus.

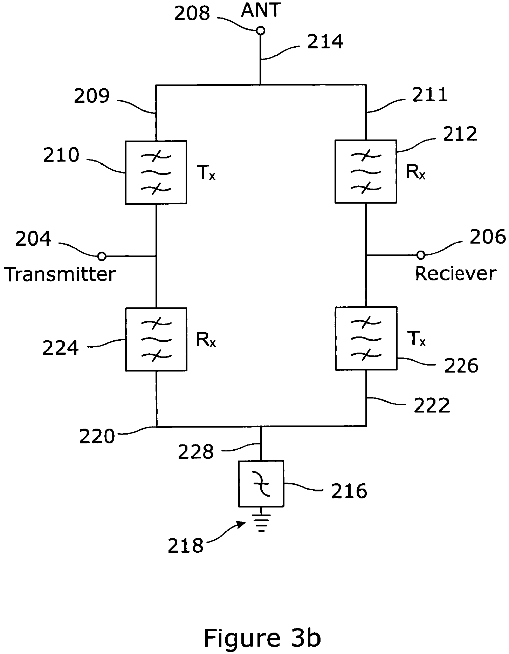

Figure 3b shows a further embodiment of the present invention with similar circuitry to the embodiment shown in figure 3a. However, in this embodiment, the first channel port 204 is a transmission connection port for transmitting one or more RF signals and the second channel port 206 is a receive connection port for receiving one or more RF signals. The common channel port 208 is an antenna connection port for transmitting and/or receiving the RF signals.

The first filter 210 in the first RF pathway 209 and the fourth filter 226 in the fourth RF pathway 222 are both transmit filters for allowing the passage of one or more transmit signals therethrough at a transmission RF frequency or frequency range but preventing or substantially preventing the passage of any other signal therethrough. The second filter 212 in the second RF pathway 211 and the third filter 224 in the third RF pathway 220 are both receive filters for allowing the passage of one or more receive signals therethrough at a receive RF frequency or frequency range but preventing or substantially preventing the passage of any other signal therethrough.

The result of the filter arrangement ensures that the amplitude of the leakage of RF signals between the transmit and receive ports via the first and second pathways 209, 211, is equal to or substantially equal to the amplitude of the leakage of RF signals between the transmit and receive ports via the third and fourth pathways. As there is a 180 degree phase difference between the first and second pathways 209, 211 and the third and fourth pathways 220, 222, this allows the leakage of RF signals in the pathways to cancel each other out. This in turn, creates high isolation between the transmission and receive channel ports 204, 206, irrespective of the order of filters used. This allows lower order filters to be used for filters 210, 212, 224 and 226, thereby saving on cost and space and reducing complexity of the apparatus. In addition, lower order filters results in low insertion loss.

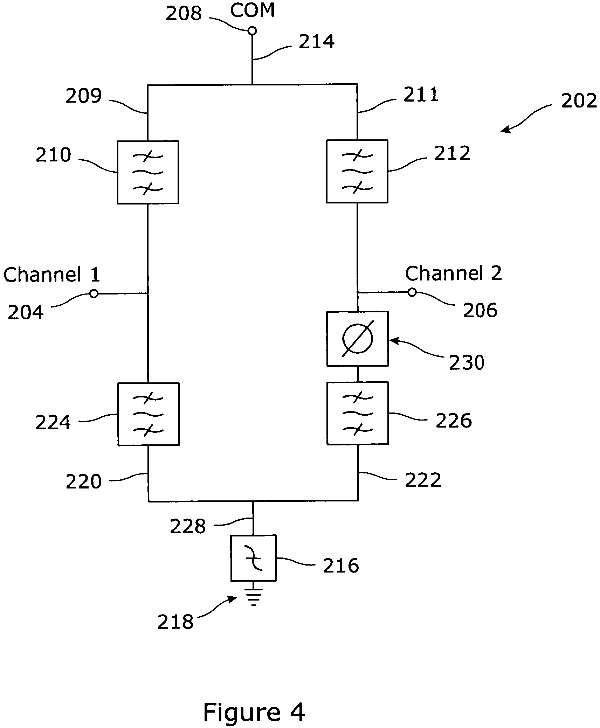

Referring to figure 4, there is shown diplexer apparatus according to one embodiment that is similar to the embodiment shown in figure 3a, with the exception that a 180 degree phase shifter 230 is provided in the fourth RF pathway 222 between the second channel port 206 and the fourth filter 226. The 180 degree phase shifter in this embodiment is a transmission line having an electrical length of 180 degrees. The use of the 180 degree phase shifter allows the filters 210 and 226 to have an equal or substantially equal RF amplitude and phase response, and the filters 212, 224 to have an equal or substantially equal RF amplitude and phase response.

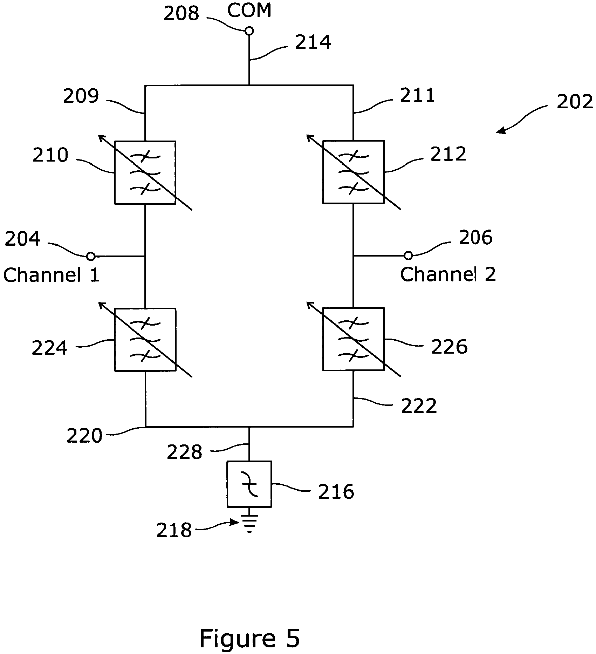

Referring to figure 5, there is shown diplexer apparatus according to one embodiment that is similar to the embodiment shown in figure 3a, with the exception that the filters 210, 212, 224 and 226 are tunable filters, in that the RF response or passband frequency of each of the filters can be tuned using tuning means, such as for example, a tuning screw. The ability to use tunable filters in the diplexer unit is as a result of lower order filters being used. The filters can be tuned in use in the field.

It will be appreciated that although the above description refers almost exclusively to the use of a diplexer unit arranged on a mast in a telecommunications network, the multiplexer apparatus of the present invention could be used in mobile handsets, in satellite systems, in mobile devices, in tablets and/or the like.

## Claims

1. Multiplexer apparatus, said multiplexer apparatus including:
- at least one common connection port;
- at least first and second channel connection ports and/or at least one transmit radio frequency connection port and at least one receive radio frequency connection port;
- at least one first radio frequency path connected between said at least one common connection port and the at least first channel connection port or transmit radio frequency connection port;
- and at least a second radio frequency path connected between said at least one common connection port and the at least second channel connection port or receive radio frequency connection port;
- the first and second radio frequency paths for transmitting and/or receiving one or more radio frequency signals therealong in use;
- at least one filter means provided in each of said at least first and second radio frequency paths for filtering one or more radio frequency signals; **characterised in that**:
- a further connection port is provided that is electrically terminated;
- a third radio frequency path is provided between the first channel connection port or the transmit connection port and the electrically terminated connection port;
- a fourth radio frequency path is provided between the second channel connection port or the receive connection port and the electrically terminated connection port;
and wherein at least one filter means is provided in each of the third and fourth radio frequency paths.

2. Multiplexer apparatus according to claim 1 wherein the further connection port is electrically terminated in a match, impedance or load that is equal to or substantially equal to a match, impedance or load applied to the common connection port.

3. Multiplexer apparatus according to claim 1 wherein the radio frequency amplitude response in the path between the at least first and second channel connection ports, or between the transmit connection port and the receive connection port, via the first and second radio frequency paths is equal to or substantially equal to the radio frequency amplitude response in the path between the at least first and second channel connection ports, or between the transmit connection port and the receive connection port, via the third and fourth radio frequency paths.

4. Multiplexer apparatus according to claim 1 wherein the path between the at least first and second connection ports, or between the transmit and receive connection ports, via the first and second paths has a 180 or substantially 180 degree phase difference to the path between the at least first and second connection ports, or between the transmit and receive connection ports, via the third and fourth paths.

5. Multiplexer apparatus according to claim 4 wherein the phase difference is caused by phase shifting means; by providing at least one different type of coupling within and/or between the paths; a transmission line having an electrical length of 180 degrees; by arranging the first and fourth filter means to have an equal to substantially equal radio frequency amplitude and phase response, and arranging the second and third filter means to have an equal or substantially equal radio frequency amplitude response but an opposite or substantially opposite phase response.

6. Multiplexer apparatus according to claim 5 wherein the at least one different type of coupling is an electrical coupling, a magnetic coupling, a positive coupling and/or a negative coupling.

7. Multiplexer apparatus according to claims 5 or 6 wherein the at least one different type of coupling is provided between one or more resonators or resonating means in or associated with the filter means, or between the input or output ports of the filter means.

8. Multiplexer apparatus according to claim 1 wherein the radio frequency amplitude response between the filter means in the first radio frequency path is equal to or substantially equal to the radio frequency amplitude response of the filter means in the fourth radio frequency path.

9. Multiplexer apparatus according to claim 1 wherein the radio frequency amplitude response between the filter means in the second radio frequency path is equal to or substantially equal to the radio frequency amplitude response of the filter means in the third radio frequency path.

10. Multiplexer apparatus according to claim 1 wherein the filter means within a particular path consists of a single filter, two or more filters, or any or any combination of one or more low pass filters, high pass filters, passband filters or band stop filters.

11. Multiplexer apparatus according to claim 1 wherein the further connection port that is electrically terminated includes any or any combination of impedance means or device, resistor means, capacitor means, inductor means, one or more resistors, one or more capacitors, or one or more inductors.

12. Multiplexer apparatus according to claim 1 wherein the filter means in any or any combination of the paths are or include one or more tuneable filters to allow the filter means to be tuned so as to operate at a particular frequency or set of frequencies in use.

13. Multiplexer apparatus according to claim 1 wherein the common connection port and/or the further connection port are tuneable and/or are provided with tuning means to allow the match, impedance or load applied to the ports to be made equal or substantially equal to each other.

14. Multiplexer apparatus according to claims 12 or 13 wherein the tuneable filters are tuneable using tuning means, or any or any combination of one or more rotatable screws, threaded screws or tuning screws.

15. A method of using multiplexer apparatus, said multiplexer apparatus including:
- at least one common connection port;
- at least first and second channel connection ports and/or at least one transmit radio frequency connection port and at least one receive radio frequency connection port;
- said method including the steps of providing at least one first radio frequency path between said at least one common connection port and the at least first channel connection port or transmit radio frequency connection port;
- providing at least a second radio frequency path between said at least one common connection port and the at least second channel connection port or receive radio frequency connection port;
- the first and second radio frequency paths for transmitting and/or receiving one or more radio frequency signals therealong in use;
- providing at least one filter means in each of said at least first and second radio frequency paths for filtering one or more radio frequency signals; **characterised in that** the method further includes the steps of:
- electrically terminating a further connection port;
- providing a third radio frequency path between the first channel connection port or the transmit connection port and the electrically terminated connection port;
- providing a fourth radio frequency path between the second channel connection port or the receive connection port and the electrically terminated connection port;
and providing at least one filter means in each of the third and fourth radio frequency paths.
